# EUROPÄISCHE PATENTSCHRIFT

(11) **EP 1 756 986 B1**
(45) Veröffentlichungstag und Bekanntmachung des Hinweises auf die Patenterteilung: **16.06.2010**
(21) Anmeldenummer: 05717162.1
(22) Anmeldetag: 30.03.2005
(51) Int. Cl.: H04J 3/06

(54) **VERFAHREN ZUR ETABLIERUNG EINER GLOBALEN ZEITBASIS IN EINEM ZEITGESTEUERTEN KOMMUNIKATIONSSYSTEM UND KOMMUNIKATIONSSYSTEM**
METHOD FOR ESTABLISHING A GLOBAL TIME BASE IN A TIMED COMMUNICATIONS SYSTEM AND ASSOCIATED COMMUNICATIONS SYSTEM
PROCEDE POUR METTRE EN PLACE UNE BASE TEMPORELLE GLOBALE DANS UN SYSTEME DE COMMUNICATIONS COMMANDE DANS LE TEMPS ET SYSTEME DE COMMUNICATIONS ASSOCIE

(30) Priorität: 04.06.2004 DE 102004027503
(43) Veröffentlichungstag der Anmeldung: 28.02.2007
(73) Patentinhaber: ROBERT BOSCH GMBH, 70442 Stuttgart (DE)
(72) Erfinder: FUEHRER, Thomas, 70839 Gerlingen (DE)
(86) Internationale Anmeldenummer: PCT/EP2005/051447
(87) Internationale Veröffentlichungsnummer: WO 2005/119951

(56) Entgegenhaltungen:
- EP-A- 1 179 920
- EP-A- 1 355 456
- EP-A- 1 355 459
- US-A- 4 939 752
- US-A- 5 577 075
- US-A- 5 848 028
- US-A1- 2001 021 196

## Beschreibung

### Stand der Technik

Die vorliegende Erfindung betrifft ein Verfahren zur Etablierung einer globalen Zeitbasis in einem zeitgesteuerten Kommunikationssystem. Das Kommunikationssystem umfasst ein Netzwerk und mehrere daran angeschlossene Teilnehmer. Mindestens einer der Teilnehmer wird als Zeitmaster definiert, auf den die übrigen Teilnehmer des Kommunikationssystems synchronisiert werden.

Die Erfindung betrifft außerdem ein zeitgesteuertes Kommunikationssystem, das ein Netzwerk und mehrere daran angeschlossene Teilnehmer umfasst. Mindestens ein Teilnehmer ist als Zeitmaster definiert, auf den die übrigen Teilnehmer des Kommunikationssystems synchronisiert sind.

In zeitgesteuerten, zyklusbasierten Kommunikationssystemen werden Nachrichten zyklisch nach einem festen zeitlichen Schema gesendet. Der zeitliche Ablauf wird von einem freilaufenden Zeitgeber abgeleitet. Das zeitliche Schema ergibt sich aus einem vorgegebenen Kommunikationszyklus, der in mehrere Sendeschlitze (sogenannte Sendeslots) aufgeteilt ist. Eine Nachricht wird einem Sendeschlitz eindeutig zugewiesen. Eine Nachricht hat somit eine bestimmte Position in dem Kommunikationszyklus.

Daneben ist ein Zeitgeberverfahren beispielsweise aus der EP 1 179 920 A2 bekannt. Darin wird bei Ausfall des Taktgebers ein Teilnehmer als Zeitgeber derart eingesetzt, dass dessen normale Nachrichten als Synchronisation verwendet werden. Dazu muss durch Konfiguration sichergestellt werden, dass diese Nachrichten als SYNC durch die anderen Teilnehmer erkannt und akzeptiert werden. Darin sind allerdings keine ausgewiesenen Referenznachrichten zum Aufbau eines Kommunikationszyklus vorgesehen, noch das Zuweisen eines separaten Zeitschlitzes für jede solche Referenznachricht eines Teilnehmers.

Weiterhin ist es bekannt, den freilaufenden Zeitgeber, die sogenannte globale Zeitbasis, durch einen verteilt in den Kommunikationsrechnern, den sogenannten Teilnehmern, ablaufenden Algorithmus auf Basis speziell gekennzeichneter Nachrichten zu ermitteln. Dabei werden von allen Teilnehmern des Kommunikationssystems auf Basis von speziellen, eindeutigen Nachrichten Zeitmessungen genommen, diese Zeitmessungen gemittelt und dann mittels eines Algorithmus die globale Zeitbasis errechnet. Der Algorithmus kann beispielsweise das arithmetische Mittel der Zeitmessungen errechnen, das dann als globale Zeitbasis herangezogen wird.
Die lokalen Uhren der Teilnehmer werden dann auf diese errechnete globale Zeitbasis abgestimmt.

Alternativ, wie in der US 2001/0021196 A1 ist es bekannt, dass die Etablierung einer globalen Zeitbasis auf dem Prinzip eines Zeitmasters beruht. Dabei wird einem der Teilnehmer die Funktion des Zeitmasters zugeordnet, die lokale Uhr des Zeitmasters wird als globale Zeitbasis herangezogen und die anderen Teilnehmer in dem Kommunikationssystem werden auf die lokale Uhr des Zeitmasters oder eine davon abgeleitete Zeitbasis synchronisiert. Der Zeitmaster sorgt für den Start des Kommunikationssystems und für den normalen Betrieb gemäß Spezifikation. Die Synchronisation der Teilnehmer auf den Zeitmaster erfolgt also sowohl nach dem Hochfahren des Kommunikationssystems als auch von Zeit zu Zeit während des bestimmungsgemäßen Betriebs des Kommunikationssystems.

Im Rahmen der Synchronisation sendet der Zeitmaster eine sogenannte Referenznachricht mit einer Zeitinformation (wie dies an sich beispielsweise bei dem Funktionsprinzip eines TTCAN (Time Triggered Controller Area Network)-Kommunikationssystems bekannt ist), die von allen anderen Teilnehmern zur Synchronisation herangezogen wird. Das heißt, die lokalen Uhren werden auf die Zeitinformation dieser Referenznachricht abgestimmt. Dieses Prinzip ist jedoch problematisch, da bei Ausfall des Zeitmasters eine Synchronisation der Teilnehmer nicht mehr möglich und folglich ein Betreib des Kommunikationssystems nur noch eingeschränkt oder gar nicht mehr möglich ist. Ein nach diesem Prinzip arbeitendes Kommunikationssystem weist somit für viele sicherheitsrelevante Anwendungen, insbesondere im Automobilbereich, keine ausreichende Verfügbarkeit und Sicherheit auf.

Moderne zyklusbasierte Kommunikationssysteme unterstützen die Möglichkeit, einerseits deterministische, zeitgesteuerte Daten von genau einem Teilnehmer zu einem festgesetzten Zeitpunkt zu senden und andererseits ereignisorientierte Daten, zum Beispiel Diagnosedaten, spontan beim Eintritt eines bestimmten Ereignisses zu senden. Zu diesem Zweck ist die zyklisch wiederkehrende Kommunikationsrunde, das heißt ein Kommunikationszyklus, in besonderer Weise organisiert. So ist es beispielsweise aus einem FlexRay-Kommunikationssystem bekannt, die Kommunikationsrunde in ein statisches Segment und in ein optionales dynamisches Segment aufzuteilen. Eine sogenannte "Network Idle Time" (NIT) schließt die Kommunikationsrunde ab. Eine solche Konfiguration wird als Dynamic Mode bezeichnet.

Ausgehend von dem beschriebenen Stand der Technik liegt der vorliegenden Erfindung die Aufgabe zugrunde, in einem Kommunikationssystem, bei dem die Teilnehmer mittels eines Zeitmasters auf eine globale Zeitbasis synchronisiert werden, die Sicherheit, Zuverlässigkeit und Verfügbarkeit zu verbessern.

Zur Lösung dieser Aufgabe wird ausgehend von dem Verfahren der eingangs genannten Art vorgeschlagen, dass ein Teilnehmer als Haupt-Zeitmaster und mindestens ein weiterer Teilnehmer als Ersatz-Zeitmaster definiert wird. Dabei wird die Reihenfolge der Ersatz-Zeitmaster vorgegeben, falls mehr als ein Teilnehmer als Ersatz-Zeitmaster definiert wird. Zunächst wird versucht, alle Teilnehmer des Kommunikationssystems auf den Haupt-Zeitmaster zu synchronisieren. Falls dies misslingt, wird so lange in der vorgegebenen Reihenfolge jeweils der nächste Ersatz-Zeitmaster ausgewählt und versucht, alle Teilnehmer des Kommunikationssystems auf den ausgewählten Ersatz-Zeitmaster zu synchronisieren, bis entweder die Synchronisation der Teilnehmer des Kommunikationssystems erfolgreich war oder auch eine Synchronisation der Teilnehmer auf den letzten Ersatz-Zeitmaster misslungen ist.

### Vorteile der Erfindung

Bei dem erfindungsgemäßen Verfahren ist aus Redundanzgründen der Haupt-Zeitmaster durch einen oder mehrere Ersatz-Zeitmaster abgesichert. In dem Kommunikationssystem ist also nicht nur ein Zeitmaster, sondern sind je nach gewünschtem Grad der Redundanz einer oder mehrere weitere potenzielle Zeitmaster vorgesehen, wobei immer nur einer der potenziellen Zeitmaster zum Zwecke der Synchronisierung der übrigen Teilnehmer des Kommunikationssystems aktiv ist. In den betreffenden Teilnehmern, die als Ersatz-Zeitmaster definiert wurden, kann in die Applikation eingegriffen werden. Die Applikation muss dann den Teilnehmer, der als Ersatz-Zeitmaster definiert wird, derart umkonfigurieren, dass dieser Teilnehmer die Zeitinformationen bei Bedarf an die übrigen Teilnehmer senden kann. Das erfindungsgemäße Verfahren hat den Vorteil, dass bei Ausfall eines Zeitmasters eine Synchronisation der Teilnehmer immer noch durch einen der potentiellen Zeitmaster möglich ist. Folglich ist ein uneingeschränkter, vollwertiger Betreib des Kommunikationssystems auch nach Ausfall des Haupt-Zeitmasters möglich. Das erfindungsgemäße Kommunikationssystem weist somit eine besonders hohe Sicherheit, Zuverlässigkeit und Verfügbarkeit auf, die für viele Anwendungen, insbesondere sicherheitskritische Anwendungen im Automobilbereich, äußerst wichtig ist.

Gemäß einer vorteilhaften Weiterbildung der Erfindung wird vorgeschlagen, dass zur Synchronisation der Teilnehmer des Kommunikationssystems der Zeitmaster, auf den die Teilnehmer synchronisiert werden sollen, eine Referenznachricht mit Zeitinformationen sendet, die von den übrigen Teilnehmern empfangen und zur Abstimmung ihrer lokalen Uhren herangezogen werden. Die Referenznachricht weist eine einzigartige Kennung auf und trägt als Nutzdaten unter anderem die Zeitinformationen des Zeitmasters. Sie kann von den übrigen Teilnehmern schnell und sicher als Referenznachricht erkannt und zur Synchronisation herangezogen werden.

Gemäß einer bevorzugten Ausführungsform der Erfindung wird vorgeschlagen, dass ein Teilnehmer des Kommunikationssystems in Abhängigkeit von einem Zeitpunkt synchronisiert wird, zu dem er die Referenznachricht empfängt. Es ist denkbar, dass die Referenznachricht als Zeitinformation den Zeitpunkt des Absendens der Referenznachricht von dem Zeitmaster und/oder vorgegebene Zeitpunkte für den Empfang der Nachricht durch die verschiedenen zu synchronisierenden Teilnehmer umfasst. Unter Berücksichtigung dieser Zeitinformationen kann durch einen Vergleich mit dem Zeitpunkt für den tatsächlichen Empfang der Referenznachricht durch einen Teilnehmer, das heißt anhand der Laufzeit der Referenznachricht, die lokale Uhr des Teilnehmers entsprechend synchronisiert werden.

Vorteilhafterweise beobachtet zumindest der in der vorgegebenen Reihenfolge nach dem derzeit ausgewählten Zeitmaster liegende Ersatz-Zeitmaster den übergeordneten Zeitmaster. Bei Ausbleiben der Referenznachricht des derzeit ausgewählten Zeitmasters sendet der in der vorgegebenen Reihenfolge den derzeit ausgewählten Zeitmaster liegende Ersatz-Zeitmaster seinerseits eine Referenznachricht. Vorzugsweise beobachten die in der vorgegebenen Reihenfolge nach dem derzeit ausgewählten Zeitmaster liegenden Ersatz-Zeitmaster den übergeordneten Zeitmaster, und sendet bei Ausbleiben der Referenznachricht der in der vorgegebenen Reihenfolge nach dem derzeit ausgewählten Zeitmaster liegende Ersatz-Zeitmaster seinerseits eine Referenznachricht. Nach Ausfall eines übergeordneten Zeitmasters kann also der in der vorgegebenen Reihenfolge nachfolgende potenzielle Zeitmaster die Synchronisierung der übrigen Teilnehmer des Kommunikationssystems übernehmen.

Vorteilhafterweise beobachtet zumindest der derzeit ausgewählte Ersatz-Zeitmaster den Haupt-Zeitmaster und gegebenenfalls die übergeordneten Ersatz-Zeitmaster. Falls einer der übergeordneten Zeitmaster eine Referenznachricht sendet, verzichtet der derzeit ausgewählte Zeitmaster seinerseits auf das Senden einer Referenznachricht. Vorzugsweise beobachten der derzeit ausgewählte Zeitmaster und die in der vorgegebenen Reihenfolge unterhalb des derzeit ausgewählten Zeitmasters liegenden Ersatz-Zeitmaster die übergeordneten Ersatz-Zeitmaster und den Haupt-Zeitmaster. Falls einer der übergeordneten Zeitmaster eine Referenznachricht sendet, sendet der derzeit ausgewählte Zeitmaster seinerseits keine Referenznachricht. Auf diese Weise wird erreicht, dass die Ersatz-Zeitmaster nur so lange die Synchronisierung der übrigen Teilnehmer übernehmen, wie die in der vorgegebenen Reihenfolge übergeordneten Zeitmaster keine Referenznachricht senden. Sobald einer der übergeordneten Zeitmaster wieder aktiv ist und eine Referenznachricht sendet, gibt der untergeordnete Zeitmaster die Synchronisierungsfunktion wieder an den reaktivierten übergeordneten Zeitmaster ab.

Gemäß einer anderen vorteilhaften Weiterbildung der Erfindung wird vorgeschlagen, dass Daten in dem Kommunikationssystem zyklusbasiert übertragen werden. Die Referenznachrichten von verschiedenen Zeitmastern werden vorzugsweise nicht innerhalb des gleichen Kommunikationszyklus, sondern in aufeinander folgenden Kommunikationszyklen gesendet.

Gemäß einer weiteren bevorzugten Ausführungsform der Erfindung wird vorgeschlagen, dass Daten in dem Kommunikationssystem zyklusbasiert übertragen werden. Ein Kommunikationszyklus wird in mehrere Sendeschlitze unterteilt, von denen mindestens ein Sendeschlitz Teil eines statischen Segments des Kommunikationszyklus zum Übertragen von deterministisch Daten zu einem fest vorgegebenen Zeitpunkt und mindestens ein weiterer Sendeschlitz Teil eines dynamischen Segments des Kommunikationszyklus zum Übertragen von ereignisorientierten Daten zu einem Zeitpunkt ist, der abhängig vom Auftreten eines Ereignisses ist. In dem statischen Segment sind mindestens so viele Sendeschlitze vorgesehen, wie Haupt- und Ersatz-Zeitmaster definiert wurden. Jedem Zeitmaster wird einer der Sendeschlitze des statischen Segments des Kommunikationszyklus zum Senden seiner Referenznachricht zugeordnet.

Bei bestimmten Kommunikationssystemen, zum Beispiel bei FlexRay, wird eine Bestimmung eines Korrekturwertes für eine Korrektur-Rate und einen Offset (sogenannte rate- und offset-correction) der lokalen Uhren zu der globalen Zeitbasis durch Messung über zwei Kommunikationsrunden vorgenommen. Durch die Übernahme der Funktion des Zeitmasters durch einen potenziellen Zeitmaster in einer beliebigen Kommunikationsrunde und durch das damit verbundene Aussenden von dessen Referenznachricht kann die Uhrensynchronisation aller übrigen Teilnehmer des Kommunikationssystems beeinträchtigt werden. Dies kann akzeptiert werden, wobei dann mit einer kurzfristigen Störung in der Synchronisationsgenauigkeit bei allen übrigen Teilnehmern des Kommunikationssystems gerechnet werden muss. Ein Korrekturwert für eine Korrektur-Rate von zusätzlich einer Slotlänge wäre das Resultat. Abhängig von der Slotlänge wäre dies mit der Toleranz in der Uhrensynchronisation abzugleichen.

Es sind aber auch verschiedene Maßnahmen denkbar, durch die die Auswirkungen einer Übernahme der Synchronisationsfunktion durch einen potentiellen Zeitmaster zwischen den beiden beobachteten Kommunikationsrunden verhindert bzw. kompensiert werden können. Diesbezüglich wird beispielsweise vorgeschlagen, dass zur Synchronisation der Teilnehmer des Kommunikationssystems nach einem Übergang der Zeitmasterfunktion von einem Teilnehmer auf einen anderen Teilnehmer der neue Zeitmaster erst in einem Kommunikationszyklus mit einem ungeraden Rundenzähler die Referenznachricht sendet. Alternativ wird vorgeschlagen, dass zur Synchronisation der Teilnehmer des Kommunikationssystems nach einem Übergang der Zeitmasterfunktion von einem Teilnehmer auf einen anderen Teilnehmer der neue Zeitmaster erst in einem Kommunikationszyklus mit einem geraden Rundenzähler die Referenznachricht sendet. Je nach dem ob die beiden beobachteten Kommunikationszyklen mit einem geraden oder ungeraden Rundenzähler enden, werden stets beide Zyklen abgewartet, bevor der neue Zeitmaster seine Referenznachricht senden darf.

Als eine weitere Maßnahme wird vorgeschlagen, dass die Referenznachricht eine Kennung des Zeitmasters enthält und eine Änderung der Kennung zwischen einem Kommunikationszyklus und dem nächsten bei der Synchronisierung der Teilnehmer des Kommunikationssystems auf die globale Zeitbasis berücksichtigt wird. Eine solche Erweiterung der Uhrensynchronisation in allen Teilnehmern des Kommunikationssystems hat den Vorteil, dass bei einer Änderung der Kennung, das heißt wenn die Synchronisierungsfunktion von einem Zeitmaster auf einen anderen übergeht, dieser Wechsel bei der Berechnung des Korrekturwertes für die Korrektur-Rate berücksichtig werden kann.

Vorteilhafterweise wird das Verfahren beim Hochfahren bzw. beim Starten des Kommunikationssystems ausgeführt. Alternativ oder zusätzlich kann das Verfahren von Zeit zu Zeit während des laufenden, bestimmungsgemäßen Betriebs des Kommunikationssystems ausgeführt werden.

Als eine weitere Lösung der Aufgabe der vorliegenden Erfindung wird ausgehend von dem Kommunikationssystem der eingangs genannten Art vorgeschlagen, dass ein Teilnehmer als Haupt-Zeitmaster und mindestens ein weiterer Teilnehmer als Ersatz-Zeitmaster definiert ist. Die Reihenfolge der Ersatz-Zeitmaster ist vorgegeben, falls mehr als ein Teilnehmer als Ersatz-Zeitmaster definiert ist. Das Kommunikationssystem weist Mittel auf, die zunächst versuchen, alle Teilnehmer des Kommunikationssystems auf den Haupt-Zeitmaster zu synchronisieren, und dann, falls dies misslingt, so lange in der vorgegebenen Reihenfolge jeweils den nächsten Ersatz-Zeitmaster auswählen und versuchen, alle Teilnehmer des Kommunikationssystems auf den ausgewählten Ersatz-Zeitmaster zu synchronisieren, bis entweder die Synchronisation der Teilnehmer des Kommunikationssystems erfolgreich war oder auch eine Synchronisation der Teilnehmer auf den letzten Ersatz-Zeitmaster misslungen ist.

### Zeichnungen

Weitere Merkmale, Anwendungsmöglichkeiten und Vorteile der Erfindung ergeben sich aus der nachfolgenden Beschreibung von Ausführungsbeispielen der Erfindung, die in der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung. Es zeigen:
- Figur 1: ein erfindungsgemäßes zeitgesteuertes Kommunikationssystem in schematischer Darstellung;
- Figur 2: einen Kommunikationszyklus zur Übertragung von Daten in einem zeitgesteuerten Kommunikationssystem;
- Figur 3: einen Kommunikationszyklus zur Übertragung von Daten in einem zeitgesteuerten Kommunikationssystem mit Dynamic Mode;
- Figur 4: einen Kommunikationszyklus zur Übertragung von Daten in dem zeitgesteuerten Kommunikationssystem aus Figur 1; und
- Figur 5: einen Ablauf des erfindungsgemäßen Verfahrens anhand eines Kommunikationszyklus.

### Beschreibung der Ausführungsbeispiele

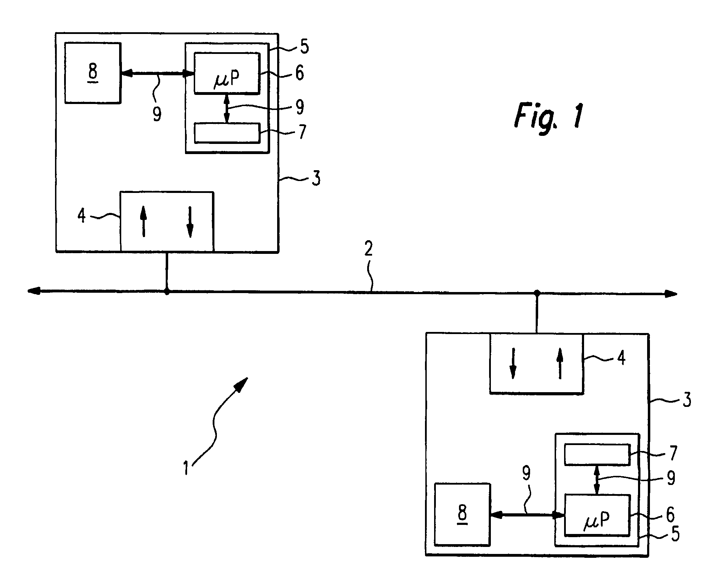

In Figur 1 ist ein erfindungsgemäßes zeitgesteuertes Kommunikationssystem in seiner Gesamtheit mit den Bezugszeichen 1 bezeichnet. Das Kommunikationssystem 1 umfasst ein Netzwerk 2 und mehrere daran angeschlossene Teilnehmer 3. Die Teilnehmer 3 werden auch als Knoten oder als Endgeräte bezeichnet. Ein Kommunikationssystem 1, wie es in Figur 1 beispielhaft dargestellt ist, wird beispielsweise in Kraftfahrzeugen zum Informationsaustausch zwischen verschiedenen Kraftfahrzeugkomponenten (den Teilnehmern) eingesetzt. Die Teilnehmer 3 sind über Schnittstellen 4 an das Netzwerk 2 angeschlossen. Die Teilnehmer 3 umfassen ein Rechengerät 5 mit einem Mikroprozessor 6 und einem internen Speicherelement 7. Außerdem kann in den Teilnehmern 3 auch ein externes, das heißt außerhalb des Mikroprozessors 6 angeordnetes, Speicherelement 8 vorgesehen sein. Das Netzwerk 2 kann eine Ring-, Stern- oder eine beliebig andere Struktur aufweisen.

Auf den Speicherelementen 7, 8 ist ein Computerprogramm zur Steuerung und/oder Regelung der Teilnehmer 3, insbesondere zur Steuerung und/oder Regelung des Informationsaustausches zwischen den Teilnehmern 3 über das Netzwerk 2, abgelegt. Das Computerprogramm kann in dem Mikroprozessor 6 abgearbeitet werden. Zu diesem Zweck wird es über eine Datenübertragungsverbindung 9 aus dem Speicherelement 7, 8 in den Mikroprozessor 6 übertragen. In Figur 1 sind lediglich zwei Teilnehmer 3 des Kommunikationssystems 1 dargestellt. Selbstverständlich kann das erfindungsgemäße Kommunikationssystem 1 auch mehr als zwei Teilnehmer 3 umfassen.

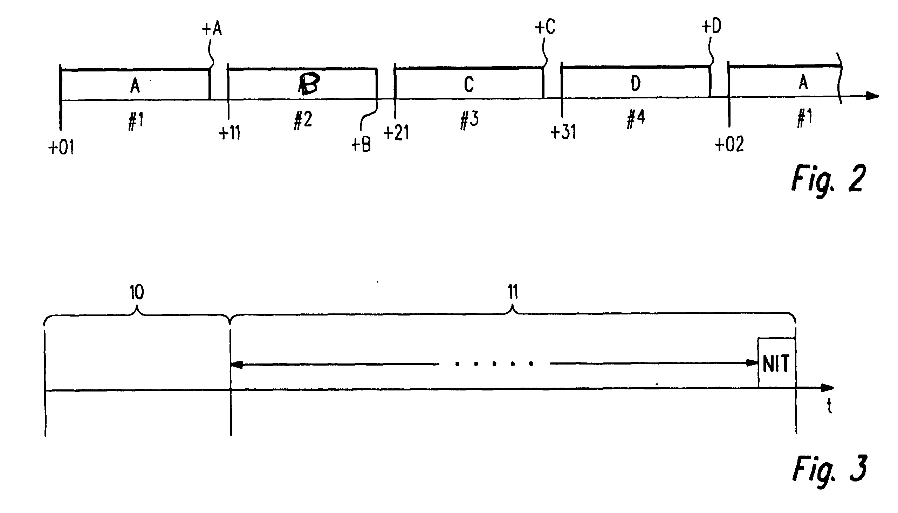

Bei dem in Figur 1 dargestellten Kommunikationssystem 1 handelt es sich um ein Zeitgesteuertes Kommunikationssystem, bei dem Nachrichten zyklisch in einem festen zeitlichen Schema übertragen werden. Der zeitliche Ablauf wird von einem freilaufenden Zeitgeber abgeleitet (sogenannte globale Zeitbasis). Das zeitliche Schema (ein sogenannter Kommunikationszyklus) wird dabei in mehrere Sendeschlitze (sog. Sendeslots) aufgeteilt. Eine Nachricht wird einem der Sendeschlitze eindeutig zugewiesen. Eine Nachricht hat somit eine vorgegebene Position innerhalb des Kommunikationszyklus. Ein entsprechendes zeitliches Schema ist beispielhaft in Figur 2 dargestellt. Der dort beispielhaft dargestellte Kommunikationszyklus umfasst vier Sendeschlitze, die von 1 bis 4 durchnummeriert sind. Die Sendeschlitze des ersten Zyklus beginnen jeweils zum Zeitpunkt t01, t11, t21 und t31. Danach beginnt zum Zeitpunkt t02 der erste Sendeschlitz des nächsten Kommunikationszyklus. Jedem Sendeschlitz ist eine bestimmte Nachricht zugeordnet. So ist dem Sendeschlitz #1 die Nachricht A, dem Sendeschlitz #2 die Nachricht B, dem Sendeschlitz #3 die Nachricht C und dem Sendeschlitz #4 die Nachricht D zugeordnet. Die Nachrichten A bis D beanspruchen nicht immer die gesamte Länge des Ihnen zugeordneten Sendeschlitzes 1 bis 4. In dem dargestellten Ausführungsbeispiel endet die Nachricht A zum Zeitpunkt tA, die Nachricht B zum Zeitpunkt tB, die Nachricht C zum Zeitpunkt tC und die Nachricht D zum Zeitpunkt tD, wobei tA<t11, tB<t21, tC<t31 und tD<t02 ist.

Die den Zeitschlitzen #1 bis #4 zugeordneten Nachrichten A bis D müssen nicht in jedem Kommunikationszyklus übertragen werden. Es ist durchaus möglich, dass ein Sendeschlitz #1 bis #4 in dem einen oder anderen Kommunikationszyklus leer ist, da in diesem Zyklus keine Nachricht A bis D übertragen werden muss.

Die Berechnung des freilaufenden Zeitgebers, der globalen Zeitbasis, erfolgt nach dem Stand der Technik auf unterschiedliche Weise. Zum einen ist es bekannt, durch einen verteilt ablaufenden Algorithmus in den Teilnehmern 3 auf Basis speziell gekennzeichneter Nachrichten A bis D die globale Zeitbasis zu berechnen. Dabei werden von allen Teilnehmern 3 auf Basis von speziellen, eindeutigen Nachrichten Zeitmessungen genommen, diese Zeitmessungen gemittelt und somit zum Beispiel ein anzustrebendes Mittel für die globale Zeitbasis errechnet. Die lokalen Uhren der Teilnehmer 3 werden dann auf diesen errechneten Mittelwert abgestimmt.

Zum anderen kann die Etablierung einer globalen Zeitbasis auch auf dem Prinzip eines Zeitmasters beruhen. Bei dem erfindungsgemäßen Kommunikationssystem 1 wird dieses Verfahren zur Etablierung einer globalen Zeitbasis mittels eines Zeitmasters eingesetzt. Dazu wird mindestens ein Teilnehmer 3 des Kommunikationssystems 1 als Zeitmaster definiert, auf den die übrigen Teilnehmer 3 des Kommunikationssystems 1 synchronisiert werden. Der Zeitmaster sendet eine sogenannte Referenznachricht, die von allen anderen Teilnehmern 3 zur Synchronisation herangezogen wird. Die lokalen Uhren der anderen Teilnehmer 3 werden auf in der Referenznachricht enthaltene Zeitinformationen synchronisiert.

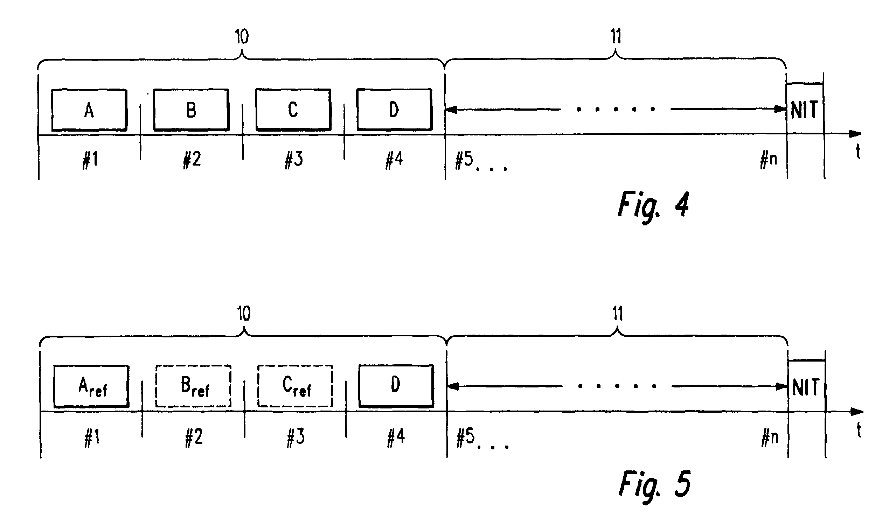

In Figur 3 ist ein Kommunikationssystem 1 dargestellt, das der Notwendigkeit Rechnung trägt, einerseits deterministische, zeitgesteuerte Daten von genau einem Teilnehmer 3 zu einem festgesetzten Zeitpunkt zu senden und andererseits ereignisorientierte Daten spontan, beispielsweise nach Eintritt eines bestimmten Ereignisses, von einem Teilnehmer 3 zu senden. Beispiele für ereignisorientierte Daten sind Diagnosedaten oder Sensordaten, die nur von Zeit zu Zeit übertragen werden müssen. In Figur 3 ist die Struktur eines Kommunikationszyklus für ein Kommunikationssystem dargestellt, das nach dem FlexRay-Standard arbeitet. Der Kommunikationszyklus umfasst das statische Segment 10 und das dynamische Segment 11. In den Sendeschlitzen #1 bis #4 des statischen Segments 10 werden die Nachrichten A bis D deterministisch übertragen (vgl. Figur 4). In den weiteren Sendeschlitzen #5 bis #n können Nachrichten ereignisorientiert übertragen werden, wobei die Arbitrierung der Datenrahmen (der sogenannten Frames) gemäß dem FlexRay-Minislotting-Verfahren abläuft.

Die vorliegende Erfindung wird im weiteren anhand eines Kommunikationssystems 1 näher erläutert, das nach dem FlexRay-Standard arbeitet. Die vorliegende Erfindung ist jedoch nicht auf den FlexRay-Standard beschränkt. Beim FlexRay-Standard ist eine Kommunikationsrunde in ein statisches Segment zur deterministischen und in ein optionales dynamisches Segment zur ereignisorientierten Datenübertragung unterteilt. Eine Kommunikationsrunde wird durch eine sogenannte Network Idle Time (NIT) beendet. Diese Konfiguration wird als sogenannter Dynamic Mode bezeichnet.

In Figur 5 ist die Struktur eines Kommunikationszyklus eines erfindungsgemäßen Kommunikationssystems 1 dargestellt. Zur Realisierung der Erfindung ist in dem Kommunikationssystem 1 einer der Teilnehmer 3 als Haupt-Zeitmaster konfiguriert. Der Sendeschlitz #1 des statischen Segments 10 ist für eine Referenznachricht A_{ref} des Haupt-Zeitmasters reserviert. Die übrigen Teilnehmer 3 des Kommunikationssystems 1 werden auf die in der Referenznachricht A_{ref} enthaltenen Zeitinformationen synchronisiert. In dem dynamischen Segment 11 werden ereignisorientiert Daten übertragen. Die Kommunikationsrunde wird durch die Network Idle Time (NIT) beendet.

Bei einem Kommunikationszyklus eines aus dem Stand der Technik bekannten Kommunikationssystems ist lediglich ein zentraler Zeitmaster vorhanden, so dass der Kommunikationszyklus wie folgt konfiguriert werden muss: ein statisches Segment 10 für genau eine Referenznachricht A_{ref} des Zeitmasters und weitere Nachrichten B, C, D von weiteren Teilnehmern (den sogenannten Slaves) und ein dynamisches Segment 11 bis zum Ende des Kommunikationszyklus für von den Teilnehmern des bekannten Kommunikationssystems spontan gesendete Nachrichten. Wird aus Redundanzgründen eine Absicherung des Zeitmasters gewünscht, so kann dies bei dem aus dem Stand der Technik bekannten Kommunikationssystem lediglich über einen Eingriff der Applikation erzielt werden. Die Applikation muss dann einen geeigneten Teilnehmer derart umkonfigurieren, dass dieser Teilnehmer eine Referenznachricht im Rahmen eines in Figur 3 dargestellten Kommunikationszyklus senden kann, wobei allerdings das Kommunikationssystem während dieser Zeit nicht mehr kommuniziert. Für das Umschalten des Teilnehmers durch die Applikation ist eine aufwendige Diagnostik notwendig und außerdem kann es zu erheblichen Einschränkungen der Echtzeitfähigkeit des Protokolls kommen.

Im Gegensatz dazu wird durch die vorliegende Erfindung mit Hilfe von Protokollmechanismen für die Redundanz der Referenznachricht gesorgt. Dazu ist außer dem Haupt-Zeitmaster noch mindestens ein weiterer Teilnehmer 3 als Ersatz-Zeitmaster definiert.

Bei dem in Figur 5 dargestellten Kommunikationszyklus des erfindungsgemäßen Kommunikationssystems 1 werden für eine gewünschte n-fache Redundanz außer dem Sendeschlitz #1 für den Hauptzeitmaster noch n weitere statische Sendeschlitze #2... #(n+1) für die Übertragung von potenziellen Referenznachrichten vorgesehen, so dass insgesamt (n+1) Sendeschlitze in dem statischen Segment 10 für Referenznachrichten reserviert sind. In dem Ausführungsbeispiel aus Figur 5 ist eine Redundanz von n=2 gewählt. Selbstverständlich kann auch jede andere Redundanz *n* ∈ *N* gewählt werden, wobei N eine beliebige natürliche Zahl ist. In diesem Fall müssten dann in dem statischen Segment 10 insgesamt 2 bzw. 11 statisches Sendeschlitze für die Referenznachricht A_{ref} und die übrigen potentiellen Referenznachrichten B_{ref}··· vorgehalten werden.

Der Haupt-Zeitmaster sendet seine Referenznachricht A_{ref} in dem ersten Sendeschlitz #1. Der Haupt-Zeitmaster sorgt für den Start des Kommunikationssystems 1 und für den normalen bestimmungsgemäßen Betrieb gemäß Spezifikation. Die Zeitinformation in der Referenznachricht A_{ref} geht direkt in die Uhrensynchronisation der Ersatz-Zeitmaster und aller übrigen Teilnehmer 3 ein. Nachdem der Haupt-Zeitmaster seine Referenznachricht A_{ref} übertragen hat, verbleiben in dem Kommunikationszyklus n=2 weitere Sendeschlitze #2, #3, die für n potentielle Referenznachrichten B_{ref} und C_{ref} vorgehalten werden.

Zur Realisierung der Erfindung wird die Protokollspezifikation dahingehend erweitert, dass die potentiellen Zeitmaster (sog. Ersatz-Zeitmaster) den Haupt-Zeitmaster während des Betriebs beobachten, d.h. es wird der Empfang der Referenznachricht A_{ref} zu einem eindeutigen, vorab festgelegten Zeitpunkt in Sendeschlitz #1 überprüft. Falls die Referenznachricht A_{ref} in dem Sendeschlitz #1 empfangen wird, wird von den Ersatzzeitmastern keine weitere Referenznachricht B_{ref}, C_{ref} gesendet. Eine Referenznachricht Brief, C_{ref} darf durch die potentiellen Zeitmaster nicht gesendet werden, um den Mechanismus zur Uhrensynchronisation aller übrigen Teilnehmer 3 nicht zu beeinträchtigen. Die Uhrensynchronisation soll allein durch den Haupt-Zeitmaster bewirkt werden. Es besteht allerdings die Möglichkeit eine "normale" Datennachricht durch die potentiellen Zeitmaster senden zu lassen. Der Sendeschlitz #4 des statischen Segments 10 sowie die Sendeschlitze des dynamischen Segments 11 werden in herkömmlicher Weise zur Informationsübertragung durch die übrigen Teilnehmer 3 (Slaves) genutzt.

Stellen die potentiellen Zeitmaster jedoch den Ausfall der Haupt-Referenznachricht A_{ref} fest (Referenznachricht A_{ref} fehlt in dem Sendeschlitz #1) so wird von den potentiellen Zeitmastern die eigene Referenznachricht B_{rief}, C_{ref} vorbereitet. Wird des Sendezeitpunkt eines Ersatzzeitmasters erreicht und wurde keine andere Referenznachricht A_{ref} beziehungsweise B_{ref} eines übergeordneten Zeitmasters empfangen, wird die lokale Referenznachricht B_{ref} bzw. C_{ref} gesendet.

Die Reihenfolge, in der die Ersatz-Zeitmaster bei Bedarf ihre Referenznachrichten B_{ref}, C_{ref} aussenden, ist vorgegeben. In dem vorliegenden Ausführungsbeispiel würde nun der gemäß vorgegebener Reihenfolge erste potentielle Zeitmaster seine Referenznachricht B_{ref} in dem Sendeschlitz #2 senden, da die Hauptreferenznachricht A_{ref} im Sendeschlitz #1 ausgefallen war. Der nächste potentielle Zeitmaster würde in diesem Fall keine eigene Referenznachricht C_{ref} in seinem Sendeschlitz #3 senden. Falls allerdings der erste Ersatz-Zeitmaster ebenfalls ausfallen würde, wird dies von dem nachfolgenden Ersatz-Zeitmaster erkannt und dieser sendet dann die Referenznachricht C_{ref} in Sendschlitz #3.

Sämtliche Teilnehmer 3 des Kommunikationssystems 1 werden auf denjenigen Zeitmaster synchronisiert, der seine Referenznachricht A_{ref} bis C_{ref} übertragen hat. Das bedeutet, dass sämtliche Teilnehmer 3 auf die gleiche Zeitbasis synchronisiert sind. Durch die Übernahme der Zeitmasterfunktion durch einen anderen Zeitmaster ergeben sich keine Sprünge, da alle Teilnehmer 3 (sowohl der Haupt-Zeitmaster, die Ersatz-Zeitmaster als auch die übrigen Teilnehmer (Slaves)) im laufendem Betrieb durch Uhrensynchronisation auf den gleichen Zeitmaster synchronisiert wurden.

Durch die Übernahme der Zeitmasterfunktion durch einen potentiellen Zeitmaster und durch die damit verbundene Übertragung der Referenznachricht B_{ref} bzw C_{ref} des ErsatzZeitmasters wird allerdings die Uhrensynchronisation der verbleibenden Teilnehmer 3 (des Haupt-Zeitmasters, der übrigen potentiellen Zeitmaster und aller übrigen Slaves) insofern beeinflusst, als die Ermittlung eines Korrekturwerts für eine Korrektur-Rate (sogenannte Rate-Korrektion) und für einen Offset durch eine Messung über zwei Kommunkationsrunden erfolgt. Gemäß der FlexRay-Spezifikation wird der Empfangszeitpunkt der Referenznachricht in Sendeschlitz #n (beispielsweise bei ungeradem Rundenzähler) mit dem Empfangszeitpunkt der Referenznachricht in Sendeschlitz #n+1 (bei geradem Rundenzähler) verglichen und über die vorkonfigurierte Rundendauer für jeden Teilnehmer 3 auf die Rate (Abweichung der lokalen Uhr über den Kommunikationszyklus) geschlossen. Erfolgt während einer solchen Messung die Übernahme der Zeitmasterfunktion durch einen anderen Teilnehmer 3, muss dies berücksichtigt werden. Folgende Möglichkeiten bieten sich an:
a) Der potentielle Zeitmaster darf seine Referenznachricht B_{ref} oder C_{ref} erst mit ungeradem Rundenzähler senden. Dadurch ergibt sich im schlimmsten Fall (worst case) eine Unterbrechung der Kommunikation von einer gesamten Kommunikationsrunde.
b) Die Uhrensynchronisation bei allen Teilnehmern 3 wird insofern erweitert, als die Referenznachrichten A_{ref} bis C_{ref} eine Kennung des Zeitmasters enthalten, der die Referenznachricht A_{ref} bis C_{ref} gesendet hat, und die Kennung bei der Synchronisation berücksichtigt wird. Bei einem Wechsel der Kennung für die Referenznachricht A_{ref} bis C_{ref} kann dies bei der Berechnung der Rate berücksichtigt werden.
c) Keine Berücksichtigung des Wechsels und damit Duldung einer kurzfristigen Störung in der Synchronisationsgenauigkeit bei allen Slaves und potentiellen Zeitmastern. Eine Rate-Korrektur von zusätzlich einer Länge eines Sendeschlitzes wäre das Resultat. Abhängig von der Länge des Sendeschlitzes wäre dies mit der Toleranz in der Uhrensynchronisation abzugleichen.

Die vorliegende Erfindung wurde anhand einer Erweiterung des Protokolls einer bestehenden FlexRay-Spezifikation um die automatisierte Übernahme der Funktion des Zeitmasters nach Ausfall des Haupt-Zeitmasters erweitert. Selbstverständlich kann die vorliegende Erfindung auch auf Kommunikationssystemen 1 eingesetzt werden, die nach einem anderen als dem FlexRay-Standard arbeiten. Durch einen geringen Bandbreiten-Vorhalt (n zusätzliche Sendeschlitze in dem Kommunikationszyklus bzw. in dem statischen bei einer gewünschten n-fachen Redundanz des Zeitmasters) und eine Ergänzung in der funktionalen Spezifikation wird erfindungsgemäß eine automatisierte n-fache Redundanz des Zeitmasters in einem zeitgesteuerten Kommunikationssystem 1 ermöglicht.

Nachfolgend werden noch einmal verschiedene Merkmale und Vorteile der Erfindung näher erläutert:
- Die vorliegende Erfindung kann bei Kommunikationssystemen Anwendung finden, bei denen die lokalen Uhren der Teilnehmer mittels eines Zeitmasters synchronisiert werden, und sogar bei solchen Kommunikationssystemen Anwendung finden, bei denen Nachrichten sowohl zeitgesteuert (deterministisch) als auch ereignisgesteuert übertragen werden können.
- Mit der vorliegenden Erfindung kann eine nahezu beliebig-fache Redundanz des Zeitmasters erzielt werden, wobei mit zunehmender Redundanz auch mehr Bandbreite in dem Kommunikationszyklus bzw. dem statischen Segment für die potentiellen Zeitmaster vorgehalten werden muss.
- Mit der vorliegenden Erfindung kann das Kommunikationssystem sowohl während des Hochfahrens als auch während des normalen bestimmungsgemäßen Betriebs konfiguriert werden.
- Der Haupt-Zeitmaster erhält die Zuteilung für den Sendeschlitz #1 in dem Kommunikationszyklus als statischer Sendeschlitz. Der Haupt-Zeitmaster ist für den Start des Netzwerks und für die Vorgabe der Zeitwerte an alle anderen Teilnehmer 3 (potentielle Zeitmaster und Slaves) im normalen Betrieb verantwortlich.
- Bei gewünschter n-facher Redundanz werden weitere n-Sendeschlitze für die potentielle Zeitmaster konfiguriert. Deren Referenznachrichten werden allerdings nicht gesendet, solange der Haupt-Zeitmaster oder ein in einer vorgegebenen Reihenfolge vorangehender Ersatz-Zeitmaster aktiv ist. Die Uhrensynchronisation wird gemäß Spezifikation nicht durch zusätzliche Referenznachrichten beeinflusst, da es in einem Kommunikationszyklus jeweils nur eine Referenznachricht geben darf. Im fehlerfreien Betrieb des Kommunikationssystems sind alle Teilnehmer (Ersatz-Zeitmaster und Slaves) auf den Hauptzeitmaster synchronisiert.
- Ein Ausfall des Haupt-Zeitmasters wird anhand der fehlenden Referenznachricht von mindestens einem, vorzugsweise von allen potentiellen Zeitmastern erkannt.
- Der im zeitlichen Verlauf eines Kommunikationszyklus gemäß der vorgegebenen Reihenfolge nächste potentielle Zeitmaster übernimmt dann das Senden der Referenznachricht mit seiner lokalen Zeitinformation und Nachrichtenkennung des Zeitmasters.
- Es sendet immer nur der aktive Zeitmaster (Haupt- oder Ersatz-Zeitmaster), alle anderen Zeitmaster senden keine Referenznachricht.
- Alle übrigen Teilnehmer erkennen den neuen Zeitmaster anhand der veränderten Nachrichtenkennung der Referenznachricht.
- Die Zeitmessung der neuen Referenznachricht wird mit der alten Zeitmessung der alten Referenznachricht abgestimmt. Die Uhrensynchronisation errechnet den neuen Rate- und Offset-Korrekturwert.
- Die Veränderung der Nachrichtenkennung in der Referenznachricht hat Einfluss auf die Berechnung der Rate und Offset-Korrekturwerte.
- Der aktive potentielle Zeitmaster gibt die Zeitmasterfunktion dann wieder an den Haupt-Zeitmaster oder den übergeordneten Ersatz-Zeitmaster ab; er darf seine Referenznachricht nicht mehr senden.

## Patentansprüche

1. Verfahren zur Etablierung einer globalen Zeitbasis in einem zeitgesteuerten Kommunikationssystem (1), das ein Netzwerk (2) und mehrere daran angeschlossene Teilnehmer (3) umfasst, wobei mindestens einer der Teilnehmer (3) des Kommunikationssystems (1) als Zeitmaster definiert wird, auf den die übrigen Teilnehmer (3) synchronisiert werden, **dadurch gekennzeichnet, dass** zur Synchronisation der Teilnehmer (3) des Kommunikationssystems (1) der Zeitmaster, auf den die Teilnehmer (3) synchronisiert werden sollen, eine Referenznachricht (A_{ref}, B_{ref}, C_{ref}) mit Zeitinformationen sendet, die von den übrigen Teilnehmern (3) empfangen und zur Abstimmung ihrer lokalen Uhren herangezogen werden, wobei ein Teilnehmer (3) als Haupt-Zeitmaster und mindestens ein weiterer Teilnehmer (3) als Ersatz-Zeitmaster definiert wird, wobei die Reihenfolge der Ersatz-Zeitmaster vorgegeben wird, falls mehr als ein Teilnehmer (3) als Ersatz-Zeitmaster definiert wird, dass zunächst versucht wird, alle Teilnehmer (3) des Kommunikationssystems (1) auf den Haupt-Zeitmaster zu synchronisieren, und falls dies misslingt, so lange in der vorgegebenen Reihenfolge jeweils der nächste Ersatz-Zeitmaster ausgewählt wird und versucht wird, alle Teilnehmer (3) des Kommunikationssystems (1) auf den ausgewählten Ersatz-Zeitmaster zu synchronisieren, bis entweder die Synchronisation der Teilnehmer (3) des Kommunikationssystems (1) erfolgreich war oder auch eine Synchronisation der Teilnehmer (3) auf den letzten Ersatz-Zeitmaster misslungen ist, wobei Daten in dem Kommunikationssystem (1) zyklusbasiert übertragen werden, wobei ein Kommunikationszyklus in mehrere Sendeschlitze (#1, ..., #4, #5, ..., #n) unterteilt wird, von denen mindestens ein Sendeschlitz (#1, ..., #4) Teil eines statischen Segments (10) des Kommunikationszyklus zum Übertragen von deterministischen Daten zu einem fest vorgegebenen Zeitpunkt und mindestens ein weiterer Sendeschlitz (#5, ..., #n) Teil eines dynamischen Segments (11) des Kommunikationszyklus zum Übertragen von ereignisorientierten Daten zu einem Zeitpunkt ist, der abhängig vom Auftreten eines Ereignisses ist, wobei in dem statischen Segment (10) mindestens so viele Sendeschlitze (#1, #2, #3) vorgesehen werden, wie Haupt- und Ersatz-Zeitmaster definiert wurden, und jedem Zeitmaster einer der Sendeschlitze (#1, #2, #3) des statischen Segments (10) des Kommunikationszyklus zum Senden seiner Referenznachricht (A_{ref}, B_{ref}, C_{ref}) zugeordnet wird.

2. Verfahren nach Anspruch 1, **dadurch gekennzeichnet, dass** ein Teilnehmer (3) des Kommunikationssystems (1) in Abhängigkeit von einem Zeitpunkt synchronisiert wird, zu dem er die Referenznachricht (A_{ref}, B_{ref}, C_{ref}) empfängt.

3. Verfahren nach Anspruch 2, **dadurch gekennzeichnet, dass** zumindest der in der vorgegebenen Reihenfolge nach dem derzeit ausgewählten Zeitmaster liegende Ersatz-Zeitmaster den übergeordneten Zeitmaster beobachtet und bei Ausbleiben der Referenznachricht (A_{ref}, B_{ref}) der in der vorgegebenen Reihenfolge nach dem derzeit ausgewählten Zeitmaster liegende Ersatz-Zeitmaster seinerseits eine Referenznachricht (B_{ref}, C_{ref}) sendet.

4. Verfahren nach Anspruch 3, **dadurch gekennzeichnet, dass** die in der vorgegebenen Reihenfolge unterhalb des derzeit ausgewählten Zeitmasters liegenden Ersatz-Zeitmaster den übergeordneten Zeitmaster beobachten und bei Ausbleiben der Referenznachricht (A_{ref}, B_{ref}) der in der vorgegebenen Reihenfolge unterhalb des derzeit ausgewählten Zeitmasters liegende Ersatz-Zeitmaster seinerseits eine Referenznachricht (B_{ref}, C_{ref}) sendet.

5. Verfahren nach einem der Ansprüche 2 bis 4, **dadurch gekennzeichnet, dass** zumindest der derzeit ausgewählte Ersatz-Zeitmaster den Haupt-Zeitmaster und gegebenenfalls die übergeordneten Ersatz-Zeitmaster beobachtet und, falls einer der übergeordneten Zeitmaster eine Referenznachricht (A_{ref}, B_{ref}) sendet, der derzeit ausgewählte Zeitmaster seinerseits keine Referenznachricht (B_{ref}, C_{ref}) sendet.

6. Verfahren nach Anspruch 5, **dadurch gekennzeichnet, dass** der derzeit ausgewählte Zeitmaster und die in der vorgegebenen Reihenfolge nach dem derzeit ausgewählten Zeitmaster liegenden Ersatz-Zeitmaster den Haupt-Zeitmaster und gegebenenfalls die übergeordneten Ersatz-Zeitmaster beobachten und, falls einer der übergeordneten Zeitmaster eine Referenznachricht (A_{ref}, B_{ref}) sendet, der derzeit ausgewählte Zeitmaster seinerseits keine Referenznachricht (B_{ref}, C_{ref}) sendet.

7. Verfahren nach einem der Ansprüche 4 bis 6, **dadurch gekennzeichnet, dass** Daten in dem Kommunikationssystem (1) zyklusbasiert übertragen werden, wobei die Referenznachrichten (A_{ref}, B_{ref}, C_{ref}) von verschiedenen Zeitmastern in aufeinander folgenden Kommunikationszyklen gesendet werden.

8. Verfahren nach einem der Ansprüche 2 bis 7, **dadurch gekennzeichnet, dass** zur Synchronisation der Teilnehmer (3) des Kommunikationssystems (1) nach einem Übergang der Zeitmasterfunktion von einem Teilnehmer (3) auf einen anderen Teilnehmer (3) der neue Zeitmaster erst in einem Kommunikationszyklus mit einem ungeraden Rundenzähler die Referenznachricht (A_{ref}, B_{ref}, C_{ref}) sendet.

9. Verfahren nach einem der Ansprüche 2 bis 8, **dadurch gekennzeichnet, dass** zur Synchronisation der Teilnehmer (3) des Kommunikationssystems (1) nach einem Übergang der Zeitmasterfunktion von einem Teilnehmer (3) auf einen anderen Teilnehmer (3) der neue Zeitmaster erst in einem Kommunikationszyklus mit einem geraden Rundenzähler die Referenznachricht (A_{ref}, B_{ref}, C_{ref}) sendet.

10. Verfahren nach einem der Ansprüche 2 bis 9, **dadurch gekennzeichnet, dass** die Referenznachricht (A_{ref}, B_{ref}, C_{ref}) eine Kennung des Zeitmasters enthält und eine Änderung der Kennung zwischen einem Kommunikationszyklus und dem nächsten bei der Synchronisierung der Teilnehmer (3) des Kommunikationssystems (1) auf die globale Zeitbasis berücksichtigt wird.

11. Verfahren nach einem der Ansprüche 1 bis 10, **dadurch gekennzeichnet, dass** das Verfahren beim Hochfahren des Kommunikationssystems (1) ausgeführt wird.

12. Verfahren nach einem der Ansprüche 1 bis 11, **dadurch gekennzeichnet, dass** das Verfahren von Zeit zu Zeit während des laufenden Betriebs des Kommunikationssystems (1) ausgeführt wird.

13. Zeitgesteuertes Kommunikationssystem (1), das ein Netzwerk (2) und mehrere daran angeschlossene Teilnehmer (3) umfasst, wobei mindestens einer der Teilnehmer (3) als Zeitmaster definiert ist, auf den die übrigen Teilnehmer (3) des Kommunikationssystems (1) synchronisiert sind, **dadurch gekennzeichnet, dass** zur Synchronisation der Teilnehmer (3) des Kommunikationssystems (1) der Zeitmaster, auf den die Teilnehmer (3) synchronisiert werden sollen, eine Referenznachricht (A_{ref}, B_{ref}, C_{ref}) mit Zeitinformationen sendet, die von den übrigen Teilnehmern (3) empfangen und zur Abstimmung ihrer lokalen Uhren herangezogen werden, wobei ein Teilnehmer (3) als Haupt-Zeitmaster und mindestens ein weiterer Teilnehmer (3) als Ersatz-Zeitmaster definiert ist, wobei die Reihenfolge der Ersatz-Zeitmaster vorgegeben ist, falls mehr als ein Teilnehmer (3) als Ersatz-Zeitmaster definiert ist, dass das Kommunilcationssystem (1) Mittel aufweist, die zunächst versuchen, alle Teilnehmer (3) des Kommunikationssystems (1) auf den Haupt-Zeitmaster zu synchronisieren, und dann, falls dies misslingt, so lange in der vorgegebenen Reihenfolge jeweils den nächsten Ersatz-Zeitmaster auswählen und versuchen, alle Teilnehmer (3) des Kommunikationssystems (1) auf den ausgewählten Ersatz-Zeitmaster zu synchronisieren, bis entweder die Synchronisation der Teilnehmer (3) des Kommunikationssystems (1) erfolgreich war oder auch eine Synchronisation der Teilnehmer (3) auf den letzten Ersatz-Zeitmaster misslungen ist, wobei Daten in dem Kommunikationssystem (1) zyklusbasiert übertragen werden, wobei ein Kommunikationszyklus in mehrere Sendeschlitze (#1, ..., #4, #5, ..., #n) unterteilt wird, von denen mindestens ein Sendeschlitz (#1, ..., #4) Teil eines statischen Segments (10) des Kommunikationszyklus zum Übertragen von deterministischen Daten zu einem fest vorgegebenen Zeitpunkt und mindestens ein weiterer Sendeschlitz (#5, ..., #n) Teil eines dynamischen Segments (11) des Kommunikationszyklus zum Übertragen von ereignisorientierten Daten zu einem Zeitpunkt ist, der abhängig vom Auftreten eines Ereignisses ist, wobei in dem statischen Segment (10) mindestens so viele Sendeschlitze (#1, #2, #3) vorgesehen werden, wie Haupt- und Ersatz-Zeitmaster definiert wurden, und jedem Zeitmaster einer der Sendeschlitze (#1, #2, #3) des statischen Segments (10) des Kommunikationszyklus zum Senden seiner Referenznachricht (A_{ref}, B_{ref}, C_{ref}) zugeordnet wird.

## Claims

1. Method for establishing a global time base in a time-controlled communication system (1) which comprises a network (2) and a plurality of subscribers (3) connected thereto, wherein at least one of the subscribers (3) in the communication system (1) is defined as a time master to which the other subscribers (3) are synchronized, **characterized in that** for the purpose of synchronizing the subscribers (3) in the communication system (1) the time master to which the subscribers (3) are to be synchronized sends a reference message (A_{ref}, B_{ref}, C_{ref}) containing time information which is received by the other subscribers (3) and is used to coordinate their local clocks, wherein one subscriber (3) is defined as a main time master and at least one further subscriber (3) is defined as a substitute time master, wherein the order of the substitute time masters is prescribed if more than one subscriber (3) is defined as a substitute time master, **in that** an attempt is first of all made to synchronize all the subscribers (3) in the communication system (1) to the main time master, and, if this is unsuccessful, the next respective substitute time master is selected, and an attempt is made to synchronize all the subscribers (3) in the communication system (1) to the selected substitute time master, in the prescribed order until either the synchronization of the subscribers (3) in the communication system (1) has been successful or else synchronization of the subscribers (3) to the last substitute time master has been unsuccessful, wherein data in the communication system (1) are transmitted on a cycle basis, wherein a communication cycle is divided into a plurality of transmission slots (#1, ..., #4, #5, ..., #n), from which at least one transmission slot (#1, ..., #4) is part of a static segment (10) of the communication cycle for transmitting deterministic data at a firmly prescribed time and from which at least one further transmission slot (#5, ..., #n), is part of a dynamic segment (11) of the communication cycle for transmitting event-oriented data at a time which is dependent on the occurrence of an event, wherein the static segment (10) is provided with at least as many transmission slots (#1, #2, #3) as there are main and substitute time masters defined, and each time master is allocated one of the transmission slots (#1, #2, #3) of the static segment (10) of the communication cycle for the purpose of sending its reference message (A_{ref}, B_{ref}, C_{ref}).

2. Method according to Claim 1, **characterized in that** a subscriber (3) in the communication system (1) is synchronized on the basis of a time at which it receives the reference message (A_{ref}, B_{ref}, C_{ref}).

3. Method according to Claim 2, **characterized in that** at least the substitute time master which is situated after the currently selected time master in the prescribed order observes the superordinate time master and, in the absence of the reference message (A_{ref}, B_{ref}), the substitute time master situated after the currently selected time master in the prescribed order sends a reference message (B_{ref}, C_{ref}) itself.

4. Method according to Claim 3, **characterized in that** the substitute time masters situated below the currently selected time master in the prescribed order observe the superordinate time master and, in the absence of the reference message (A_{ref}, B_{ref}), the substitute time master situated below the currently selected time master in the prescribed order sends a reference message (B_{ref}, C_{ref}) itself.

5. Method according to one of Claims 2 to 4,
**characterized in that** at least the currently selected substitute time master observes the main time master and possibly the superordinate substitute time masters and, if one of the superordinate time masters sends a reference message (A_{ref}, B_{ref}), the currently selected time master does not send a reference message (B_{ref}, C_{ref}) itself.

6. Method according to Claim 5, **characterized in that** the currently selected time master and the substitute time masters situated after the currently selected time master in the prescribed order observe the main time master and possibly the superordinate substitute time masters and, if one of the superordinate time masters sends a reference message (A_{ref}, B_{ref}), the currently selected time master does not send a reference message (B_{ref}, Cref) itself.

7. Method according to one of Claims 4 to 6,
**characterized in that** data in the communication system (1) are transmitted on a cycle basis, wherein the reference messages (A_{ref}, B_{ref}, C_{ref}) are sent by different time masters in successive communication cycles.

8. Method according to one of Claims 2 to 7, **characterized in that** for the purpose of synchronizing the subscribers (3) in the communication system (1), when the time master function has been transferred from one subscriber (3) to another subscriber (3), the new time master first sends the reference message (A_{ref}, B_{ref}, C_{ref}) in a communication cycle with an uneven round counter.

9. Method according to one of Claims 2 to 8, **characterized in that** for the purpose of synchronizing the subscribers (3) in the communication system (1), when the time master function has been transferred from one subscriber (3) to another subscriber (3), the new time master first sends the reference message (A_{ref}, B_{ref}, C_{ref}) in a communication cycle with an even round counter.

10. Method according to one of Claims 2 to 9,
**characterized in that** the reference message (A_{ref}, B_{ref}, C_{ref}) contains an identifier for the time master, and a change in the identifier between one communication cycle and the next is taken into account when the subscribers (3) in the communication system (1) are synchronized to the global time base.

11. Method according to one of Claims 1 to 10,
**characterized in that** the method is performed when the communication system (1) is started up.

12. Method according to one of Claims 1 to 11,
**characterized in that** the method is performed from time to time during the ongoing operation of the communication system (1).

13. Time-controlled communication system (1) which comprises a network (2) and a plurality of subscribers (3) connected thereto, wherein at least one of the subscribers (3) is defined as a time master to which the other subscribers (3) in the communication system (1) are synchronized, **characterized in that** for the purpose of synchronizing the subscribers (3) in the communication system (1) the time master to which the subscribers (3) are to be synchronized sends a reference message (A_{ref}, B_{ref}, C_{ref}) containing time information which is received by the other subscribers (3) and is used to coordinate their local clocks, wherein one subscriber (3) is defined as a main time master and at least one further subscriber (3) is defined as a substitute time master, wherein the order of the substitute time masters is prescribed if more than one subscriber (3) is defined as a substitute time master, **in that** the communication system (1) has means which first of all attempt to synchronize all the subscribers (3) in the communication system (1) to the main time master and then, if this is unsuccessful, select the next respective substitute time master, and attempt to synchronize all the subscribers (3) in the communication system (1) to the selected substitute time master, in the prescribed order until either the synchronization of the subscribers (3) in the communication system (1) has been successful or else synchronization of the subscribers (3) to the last substitute time master has been unsuccessful, wherein data in the communication system (1) are transmitted on a cycle basis, wherein a communication cycle is divided into a plurality of transmission slots (#1, ..., #4, #5, ..., #n), from which at least one transmission slot (#1, ..., #4) is part of a static segment (10) of the communication cycle for transmitting deterministic data at a firmly prescribed time and from which at least one further transmission slot (#5, ..., #n) is part of a dynamic segment (11) of the communication cycle for transmitting event-oriented data at a time which is dependent on the occurrence of an event, wherein the static segment (10) is provided with at least as many transmission slots (#1, #2, #3) as there are main and substitute time masters defined, and each time master is allocated one of the transmission slots (#1, #2, #3) of the static segment (10) of the communication cycle for sending its reference message (A_{ref}, B_{ref}, C_{ref}).

## Revendications

1. Procédé d'établissement d'une base de temps globale dans un système de communication (1) commandé dans le temps qui comprend un réseau (2) auquel plusieurs participants (3) sont raccordés,
au moins l'un des participants (3) au système de communication (1) étant défini comme maître du temps sur lequel les autres participants (3) sont synchronisés,
**caractérisé en ce que**
pour synchroniser les participants (3) au système de communication (1), le maître du temps sur lequel les participants (3) doivent être synchronisés envoie un message de référence (A_{ref}, B_{ref}, C_{ref}) qui contient des informations de temps qui sont reçues par les autres participants (3) et utilisées pour régler leur horloge locale,
**en ce qu'**un participant (3) est défini comme maître principal du temps et au moins un autre participant (3) comme maître remplaçant du temps, la succession des maîtres remplaçants du temps étant prédéterminée au cas où plusieurs abonnés (3) sont définis comme maîtres remplaçants du temps,
**en ce que** le procédé cherche d'abord à synchroniser tous les participants (3) au système de communication (1) sur le maître principal du temps et au cas où cela ne peut se faire, le maître remplaçant du temps suivant est sélectionné dans la succession prédéterminée et le procédé cherche à synchroniser tous les participants (3) au système de communication (1) sur le maître remplaçant du temps sélectionné jusqu'à ce que la synchronisation des abonnés (3) au système de communication (1) ait réussi ou que la synchronisation des abonnés (3) sur le dernier maître remplaçant du temps ait échoué,
**en ce que** des données sont transmises sur base cyclique dans le système de communication (1),
**en ce qu'**un cycle de communication est divisé en plusieurs fenêtres d'émission (n° 1, ..., n°4, n°5, ..., n°n) parmi lesquelles au moins une fenêtré d'émission (n°1, ..., n°4) fait partie d'un segment statique (10) du cycle de communication utilisé pour transmettre des données déterministes en un instant fixe prédéterminé et au moins une autre fenêtre d'émission (n°5, ..., n°n) fait partie d'un segment dynamique (11) du cycle de communication utilisé pour transmettre des données orientées événement en un instant qui dépend de la survenance d'un événement,
**en ce que** le segment statique (10) présente au moins le même nombre de fenêtres d'émission (n°1, n°2, n°3) que le nombre de maîtres de temps, principal et remplaçants, et
**en ce qu'**une des fenêtres d'émission (n°1, n°2, n°3) du segment statique (10) du cycle de communication est attribuée à chaque maître du temps pour l'émission de son message de référence (A_{ref}, B_{ref}, C_{ref}).

2. Procédé selon la revendication 1, **caractérisé en ce qu'**un abonné (3) au système de communication (1) est synchronisé en fonction de l'instant auquel il reçoit le message de référence (A_{ref}, B_{ref}, C_{ref}).

3. Procédé selon la revendication 2, **caractérisé en ce qu'**au moins le maître remplaçant du temps situé dans la succession prédéterminée après le maître du temps sélectionné à cet instant surveille le maître du temps d'ordre hiérarchique supérieur et **en ce qu'** au cas où le message de référence (A_{ref}, B_{ref}) est absent, le maître remplaçant du temps situé dans la succession prédéterminée après le maître du temps sélectionné à cet instant envoie lui-même un message de référence (B_{ref}, C_{ref}).

4. Procédé selon la revendication 3, **caractérisé en ce que** les maîtres remplaçants du temps situés dans la succession prédéterminée en dessous du maître du temps sélectionné à cet instant surveillent le maître du temps d'ordre hiérarchique plus élevé et **en ce que** si le message de référence (A_{ref}, B_{ref}) est absent, le maître remplaçant du temps situé dans la succession prédéterminée en dessous du maître du temps sélectionné à ce moment envoie lui-même un message de référence (B_{ref}, C_{ref}).

5. Procédé selon l'une des revendications 2 à 4,
**caractérisé en ce qu'**au moins le maître remplaçant du temps sélectionné à un instant observe le maître principal du temps et éventuellement les maîtres remplaçants du temps d'ordre hiérarchique plus élevé au cas où l'un des maîtres du temps d'ordre hiérarchique plus élevé envoie un message de référence (A_{ref}, B_{ref}) et **en ce que** le maître du temps sélectionné à cet instant n'envoie pour sa part pas de message de référence (B_{ref}, C_{ref}).

6. Procédé selon la revendication 5, **caractérisé en ce que** le maître du temps sélectionné à un instant et les maîtres remplaçants du temps situés dans la succession prédéterminée après le maître du temps sélectionné à cet instant observent le maître principal du temps et éventuellement les maîtres remplaçants du temps d'ordre hiérarchique plus élevé et **en ce qu'**au cas où l'un des maîtres du temps d'ordre hiérarchique plus élevé envoie un message de référence (A_{ref}, B_{ref}), le maître du temps sélectionné à ce moment n'envoie pour sa part pas de message de référence (B_{ref}, C_{ref}).

7. Procédé selon l'une des revendications 4 à 6, **caractérisé en ce que** des données sont transmises sur base cyclique dans le système de communication (1) et **en ce que** les messages de référence (A_{ref}, B_{ref}, C_{ref}) de différents maîtres du temps sont envoyés dans des cycles de communication successifs.

8. Procédé selon l'une des revendications 2 à 7, **caractérisé en ce que** pour synchroniser les participants (3) au système de communication (1) après le transfert de la fonction de maître du temps d'un participant (3) à un autre participant (3), le nouveau maître du temps n'envoie le message de référence (A_{ref}, B_{ref}, C_{ref}) que dans un cycle de communication dont l'état du compteur d'arrondi est impair.

9. Procédé selon l'une des revendications 2 à 8,
**caractérisé en ce que** pour la synchronisation des participants (3) au système de communication (1) après le transfert de la fonction de maître du temps d'un participant (3) à un autre participant (3), le nouveau maître du temps n'envoie le message de référence (A_{ref}, B_{ref}, C_{ref}) que dans un cycle de communication dont l'état du compteur d'arrondi est pair.

10. Procédé selon l'une des revendications 2 à 9,
**caractérisé en ce que** le message de référence (A_{ref}, B_{ref}, C_{ref}) contient une caractéristique du maître du temps et **en ce qu'**une modification de la caractéristique entre un cycle de communication et le suivant est prise en compte lors de la synchronisation des participants (3) au système de communication (1) sur la base globale de temps.

11. Procédé selon l'une des revendications 1 à 10, **caractérisé en ce que** le procédé est exécuté lors de la mise en service du système de communication (1).

12. Procédé selon l'une des revendications 1 à 11, **caractérisé en ce que** le procédé est exécuté de temps en temps pendant le fonctionnement du système de communication (1).

13. Système de communication (1) à temps contrôlé, qui comporte un réseau (2) auquel plusieurs participants (3) sont raccordés, au moins l'un des participants (3) étant défini comme maître du temps sur lequel les autres participants (3) au système de communication (1) sont synchronisés,
**caractérisé en ce que**
pour synchroniser les participants (3) au système de communication (1), le maître du temps sur lequel les participants (3) doivent être synchronisés envoie un message de référence (A_{ref}, B_{ref}, C_{ref}) qui contient des informations de temps reçues par les autres participants (3) et utilisé pour accorder leur horloge locale,
**en ce qu'**un abonné (3) est défini comme maître principal du temps et au moins un autre abonné (3) comme maître remplaçant du temps, la succession des maîtres remplaçants du temps étant prédéterminée au cas où plusieurs abonnés (3) sont définis comme maîtres remplaçants du temps,
**en ce que** le système de communication (1) présente des moyens qui cherchent d'abord à synchroniser tous les abonnés (3) au système de communication (1) sur le maître principal du temps et, en cas d'échec, sélectionnent le maître remplaçant du temps suivant dans la succession prédéterminée et tentent de synchroniser tous les participants (3) au système de communication (1) sur le maître remplaçant du temps sélectionné jusqu'à ce que la synchronisation des participants (3) au système de communication (1) ait réussi ou que la synchronisation des participants (3) sur le dernier maître remplaçant du temps ait échoué,
**en ce que** des données sont transmises sur base cyclique dans le système de communication (1), un cycle de communication étant divisé en plusieurs fenêtres d'émission (n°1, ..., n°4, n°5, ..., n°n) parmi lesquelles au moins une fenêtre d'émission (n° 1, ..., n°4) fait partie d'un segment statique (10) du cycle de communication utilisé pour transmettre des données déterministes en un instant fixe prédéfini et au moins une autre fenêtre d'émission (n°5, ..., n°n) fait partie d'un segment dynamique (11) du cycle de communication utilisé pour transmettre des données orientées événement à un instant qui dépend de la survenance d'un événement,
**en ce que** le nombre de fenêtres d'émission (n°1, n°2, n°3) prévues dans le segment statique (10) est au moins égal au nombre de maîtres du temps, principal et
remplaçants, et
**en ce qu'**une des fenêtres d'émission (n°1, n°2, n°3) du segment statique (10) du cycle de communication est attribuée à chaque maître du temps pour l'émission de son message de référence (A_{ref}, B_{ref}, C_{ref}).
